# EUROPÄISCHE PATENTSCHRIFT

(11) **EP 1 832 416 B1**
(45) Veröffentlichungstag und Bekanntmachung des Hinweises auf die Patenterteilung: **31.08.2011**
(21) Anmeldenummer: 07004305.4
(22) Anmeldetag: 02.03.2007
(51) Int. Cl.: B41F 13/00, G01F 23/72, G01C 5/04

(54) **Hydrostatische Messeinheit für eine Messanordnung**
Hydrostatic measuring unit for a measurement setup
Unité de mesure hydrostatique pour un dispositif de mesure

(30) Priorität: 11.03.2006 DE 102006011297
(43) Veröffentlichungstag der Anmeldung: 12.09.2007
(73) Patentinhaber: manroland AG, 63075 Offenbach/Main (DE)
(72) Erfinder: Keferstein, Regine, Dipl.-Ing., 64291 Darmstadt (DE); Reymendt, Jörg, Prof. Dr.-Ing., 64291 Darmstadt (DE); Spirk, Christian, 64372 Ober-Ramstadt (DE); Werber, Edgar, Dipl.-Ing., 63075 Offenbach (DE)
(74) Vertreter: Stahl, Dietmar

(56) Entgegenhaltungen:
- EP-A- 0 561 318
- EP-A- 0 632 251
- DE-A1- 1 448 708
- DE-A1- 4 136 236
- US-A- 4 581 931
- US-A- 4 943 773
- US-A- 5 090 128
- US-A- 5 136 884
- US-A- 5 640 880

## Beschreibung

Die Erfindung betrifft eine hydrostatische Messeinheit insbesondere für eine Druckmaschinenmessanordnung.

Druckmaschinen, wie z. B. Bogendruckmaschinen, werden bei der Installation in einer Druckerei auf einem Maschinenfundament aufgebaut. Bei dem Maschinenfundament kann es sich um einen Boden einer Maschinenhalle handeln. Ebenso kann das Maschinenfundament durch einen Bereich des Bodens der Maschinenhalle gebildet werden, der vom übrigen Boden der Maschinenhalle durch eine umlaufende Trennfuge abgetrennt ist.

Solche Maschinenfundamente, auf welchen Druckmaschinen installiert bzw. aufgebaut werden, können aufgrund der Eigenlast der Druckmaschine oder aufgrund von beim Drucken wirkenden Kräften und Momenten Verformungen bzw. Bewegungen unterliegen, wobei durch solche Fundamentbewegungen bzw. Fundamentverformungen der Maschinenfundamente die Druckqualität einer auf einem solchen Maschinenfundament installierten bzw. aufgebauten Druckmaschine beeinträchtigt werden kann. Unterliegt ein Maschinenfundament nach einer Installation einer Druckmaschine z. B. einer Verdrehung oder Verspannung, so sind nach entsprechender Fundamentverformung bzw. Fundamentbewegung die Zylinder der Druckmaschine nicht mehr exakt zueinander ausgerichtet, wodurch dann letztendlich die Druckqualität der Druckmaschine beeinträchtigt wird. Dabei ist dann nur schwer nachvollziehbar, ob die verschlechterte Druckqualität dem Maschinenfundament oder der Druckmaschine zuzuordnen ist, so dass der Druckmaschinenhersteller häufig unberechtigterweise für die verschlechterte Druckqualität in Anspruch genommen wird.

Es besteht daher ein Bedarf an einer Druckmaschinenmessanordnung, mit Hilfe derer Verformungen bzw. Bewegungen eines Maschinenfundaments mikrometergenau erfasst werden können.

Aus der US 4 943 773 A ist ein magnetostriktiver linearer Messwertaufnehmer bekannt, der mit einem Nullstellungsdetektor ausgerüstet ist. Dazu ist in einem Flüssigkeitsbehälter ein Rohr vertikal den Flüssigkeitsspiegel durchstoßend angeordnet. In dem Rohr ist ein magnetostriktiver Draht angeordnet und mit einer Messelektronik verbunden. An dem Rohr ist ein Schwimmer vertikal verschiebbar geführt, so dass er dem Flüssigkeitsspiegel folgen kann. In dem Schwimmer ist zentrisch ein Ringmagnet angeordnet.

In der US 5 090 128 A ist eine Vorrichtung zum Messen oder Steuern der Niveau-änderung zwischen verschiedenen Punkten beschrieben. Dazu sind an den Messpunkten verschiedene geschlossene Behälter angeordnet, die eine Flüssigkeit enthalten. In den Behältern ist jeweils ein kapazitiver Sensor zur Abtastung der Höhenlage des Flüssigkeitsspiegels vorgesehen. Die Behälter sind über Schlauchleitungen verbunden.

In der US 4 581 931 A ist eine Schwimmeranordnung zur Differenzmessung von Niveaulagen beschrieben. Niveauunterschiede werden dabei an verschiedenen Punkten mittels Schwimmern in einer Flüssigkeit erfasst. Die Flüssigkeit ist dazu in einer Vielzahl von Behältern verteilt. Die Behälter sind weiterhin mit Leitungen untereinander und mit einem Flüssigkeitsvorrat verbunden. Die Schwimmer sind flexibel mit den Behältern verbunden und werden von einer Messeinrichtung in ihrer Höhenlage vermessen.

Hiervon ausgehend liegt der vorliegenden Erfindung das Problem zugrunde, eine neuartige hydrostatische Messeinheit zu schaffen.

Dieses Problem wird mit den Merkmalen von Anspruch 1 gelöst.

Die erfindungsgemäße Messeinheit ist in Anspruch 1 definiert. Die erfindungsgemäße Messeinheit umfasst einen Messzylinder, der eine hinsichtlich ihres Flüssigkeitspegels zu vermessende Flüssigkeit aufnimmt, wobei der Messzylinder weiterhin einen auf der Flüssigkeit schwimmenden Schwimmkörper aufnimmt, wobei der Schwimmkörper eine Bohrung aufweist, durch die sich ein vorzugsweise magnetostriktiver Wegaufnehmer zur Führung des Schwimmkörpers erstreckt, und wobei der Schwimmkörper ein mit dem Wegaufnehmer zusammenwirkendes magnetisches Element derart trägt, dass das magnetische Element am Schwimmkörper im Bereich der Bohrung, die oberhalb des zu vermessenden Flüssigkeitspegels angeordnet ist, geführt ist. Die erfindungsgemäße Messeinheit erlaubt eine mikrometergenaue Messung des Flüssigkeitspegels, insbesondere dadurch, dass durch die Lagerung des magnetischen Elements oberhalb des Flüssigkeitspegels der Einfluss von Kapillarkräften auf das magnetischen Element eliminiert wird.

Vorzugsweise ist eine von der Flüssigkeit kontaktierte Zylinderwand des Messzylinders aus Glas, insbesondere aus Borosilikatglas, gebildet. Der ebenfalls von der Flüssigkeit kontaktierte Schwimmkörper ist vorzugsweise aus einem Kunststoff, insbesondere aus Polypropylen, gebildet. Die Flüssigkeit ist vorzugsweise aus Wasser mit einem oberflächenspannungsreduzierenden, insbesondere als Tensid ausgebildeten, Zusatzmittel gebildet. Hierdurch können durch Kohäsionskräfte und/oder Adhäsionskräfte der Flüssigkeit verursachte Messungenauigkeiten reduziert werden.

Nach einer vorteilhaften Weiterbildung der Erfindung weist ein von der Flüssigkeit kontaktierter Abschnitt einer Außenwand des Schwimmkörpers von der Zylinderwand des Messzylinders einen Abstand von mindestens 15 mm auf. Ein von der Flüssigkeit kontaktierter Abschnitt einer Innenwand des Schwimmkörpers weist vom Wegaufnehmer einen Abstand von mindestens 15 mm auf. Hierdurch können durch Kapillarkräfte verursachte Messungenauigkeiten abermals minimiert werden.

In einer bevorzugten Anordnung sind in einer Druckmaschinenmesseinrichtung mehrere hydrostatische Messeinheiten vorgesehen, wobei die hydrostatischen Messeinheiten unter Bildung eines geschlossenen Messsystems einerseits flüssigkeitsseitig zur Gewährleistung eines Flüssigkeitsaustauschs zwischen den hydrostatischen Messeinheiten und andererseits luftseitig zur Bereitstellung eines einheitlichen Atmosphärendrucks im Bereich der hydrostatischen Messeinheiten untereinander gekoppelt sind, und wobei die hydrostatischen Messeinheiten weiterhin mit einer Auswerteeinrichtung verbunden sind, die aus von den hydrostatischen Messeinheiten bereitgestellten Messsignalen die Verformung eines Maschinenfundaments oder die Installation der Druckmaschine auf einem Maschinenfundament mikrometergenau bestimmt und/oder bewertet.

Die hydrostatischen Messeinheiten sind flüssigkeitsseitig miteinander gekoppelt und bilden eine Art Schlauchwasserwaage. Im Bereich jeder hydrostatischen Messeinheit ist ein Flüssigkeitspegel erfassbar, und zwar im Sinne einer relativen Veränderung desselben. Aus den relativen Veränderungen der Flüssigkeitspegel der einzelnen hydrostatischen Messeinheiten der erfindungsgemäßen Druckmaschinenmessanordnung und dem Abstand derselben kann dann in einer Auswerteeinrichtung eine Verformung des Maschinenfundaments bestimmt werden.

Um eventuelle Atmosphärendruckunterschiede im Bereich der hydrostatischen Messeinheiten der erfindungsgemäßen Druckmaschinenmessanordnung auszuschließen, sind die einzelnen hydrostatischen Messeinheiten nicht nur flüssigkeitsseitig sondern auch luftseitig gekoppelt, um im Bereich derselben über dem Flüssigkeitspegel jeweils einen einheitlichen Atmosphärendruck zu gewährleisten. Hierdurch ist dann mit der erfindungsgemäßen Druckmaschinenmessanordnung eine mikrometergenaue Messung von Fundamentbewegungen bzw. Fundamentverformungen eines Maschinenfundaments möglich.

Eine aus erfindungsgemäßen Messeineinrichtungen gebildete Druckmaschinenmessanordnung eignet sich nicht nur zur Erfassung von Fundamentbewegungen bzw. Fundamentverformungen nach der Installation einer Druckmaschine auf dem Maschinenfundament, vielmehr kann die erfindungsgemäße Druckmaschinenmessanordnung auch bei der Installation bzw. beim Aufbau einer Druckmaschine auf einem Maschinenfundament verwendet werden, um alle Druckzylinder bzw. Druckwerke der Druckmaschine mikrometergenau relativ zueinander auszurichten.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1:: eine schematisierte Darstellung einer Druckmaschinertmessan- ordnung;
- Fig. 2:: eine schematisierte Darstellung einer erfindungsgemäßen hydro- statischen Messeinheit für die Druckmaschinenmessanordnung; und
- Fig. 3:: einen Schwimmkörper der Messeinheit gemäß Fig. 2.

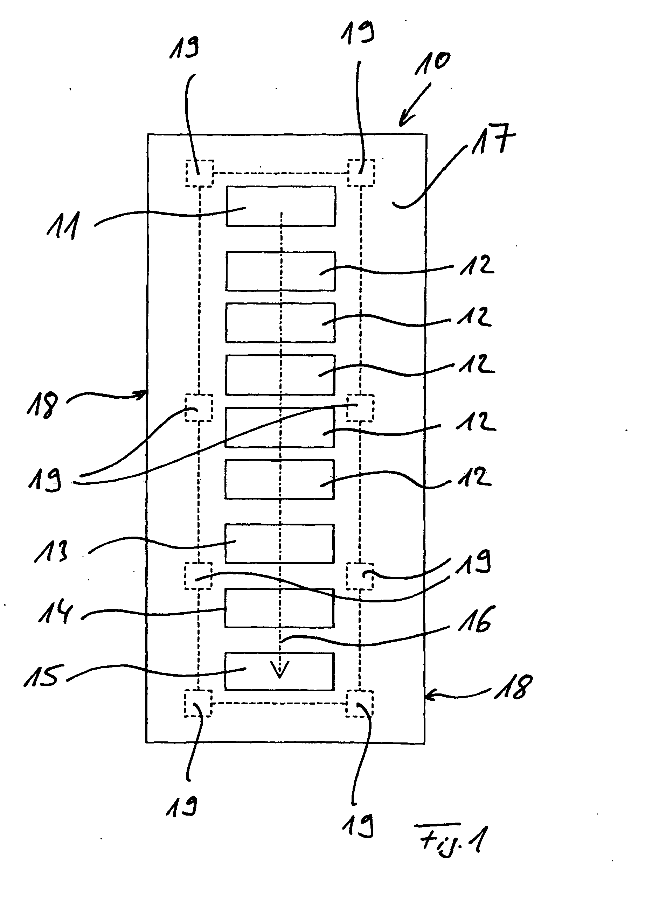

Fig. 1 zeigt zur Verdeutlichung der erfindungsgemäßen Druckmaschinenmessanordnung eine schematisierte Draufsicht auf eine Bogendruckmaschine 10, die mehrere Module umfasst, nämlich einen Anleger 11, mehrere Druckwerke 12, ein Lackwerk 13, eine Trocknungseinrichtung 14 sowie einen Ausleger 15. Zu bedruckende Druckbogen werden im Sinne des strichpunktierten Pfeils 16 durch die Module 11 bis 15 der Bogendruckmaschine 10 bewegt.

Die Bogendruckmaschine 10 ist auf einem Maschinenfundament 17 installiert bzw. aufgebaut, wobei das Maschinenfundament 17 durch eine umlaufende Trennfuge 18 von einem Boden einer Maschinenhalle getrennt ist. Das Maschinenfundament 17 unterliegt aufgrund des Eigengewichts der Bogendruckmaschine 10 sowie aufgrund der beim Drucken auftretenden Kräfte und Momente einer Belastung, so dass sich das Maschinenfundament 17 verformen sowie bewegen kann. Besonders kritisch sind dabei Verspannungen bzw. Verdrehungen des Maschinenfundaments 17, durch welche die exakte Ausrichtung von Druckzylindern bzw. Druckstellen der Bogendruckmaschine 10 relativ zueinander verändert werden kann, da hierdurch das Druckergebnis beeinträchtigt wird.

Die Erfindung schlägt eine Druckmaschinenmessanordnung vor, mit Hilfe derer Verformungen sowie Bewegungen des Maschinenfundaments 17 mikrometergenau erfasst werden können. Weiterhin eignet sich die erfindungsgemäße Druckmaschinenmessanordnung zur mikrometergenauen Installation einer Bogendruckmaschine 10 auf einem Maschinenfundament 17.

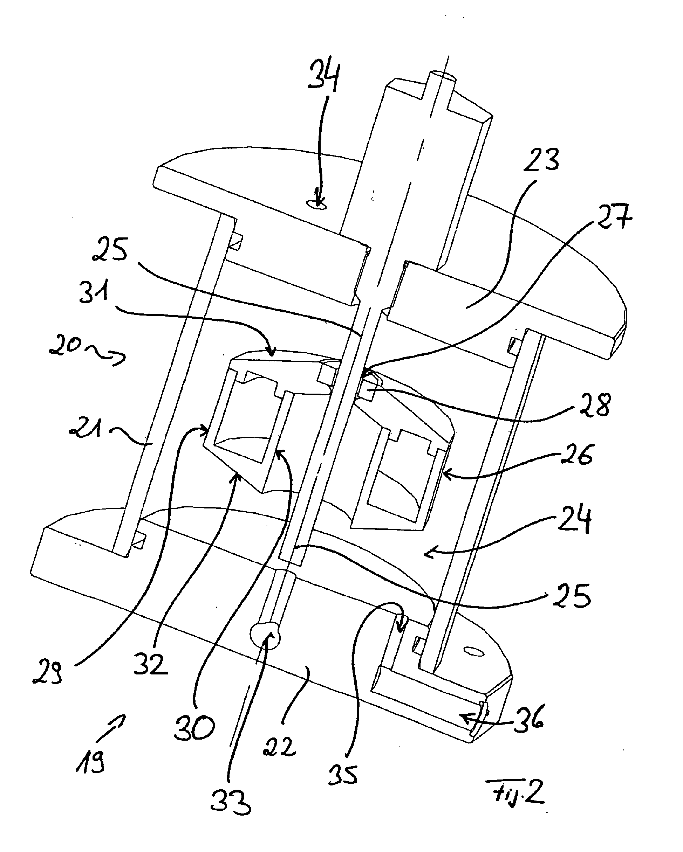

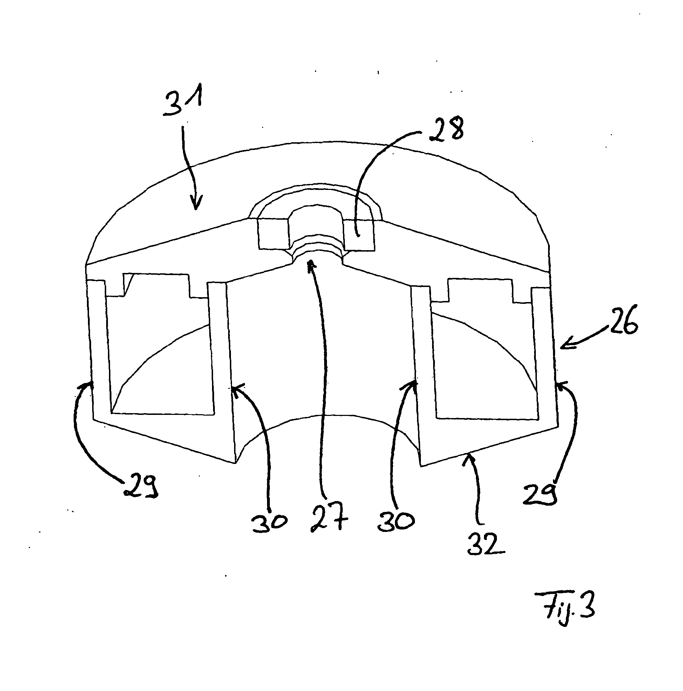

Die erfindungsgemäße Druckmaschinenmessanordnung verfügt über mehrere hydrostatische Messeinheiten 19, wobei in Fig. 1 insgesamt acht hydrostatische Messeinheiten 19 dargestellt sind. Auf den Aufbau sowie die Funktionsweise der einzelnen hydrostatischen Messeinheiten 19 wird weiter unten unter Bezugnahme auf Fig. 2 bis 5 in größerem Detail eingegangen.

An dieser Stelle sei lediglich darauf hingewiesen, dass im Bereich jeder hydrostatischen Messeinheit 19 ein Flüssigkeitspegel einer in der jeweiligen hydrostatischen Messeinheit 19 aufgenommenen Flüssigkeit vermessen werden kann, und zwar derart, dass relative Änderungen des Flüssigkeitspegels in den hydrostatischen Messeinheiten 19 erfasst werden.

Die hydrostatischen Messeinheiten 19 der Druckmaschinenmessanordnung sind im Ausführungsbeispiel der Fig. 1 ringförmig gekoppelt, nämlich einerseits flüssigkeitsseitig und andererseits luftseitig. Zwischen den einzelnen hydrostatischen Messeinheiten 19 kann ein Flüssigkeitsaustausch erfolgen. Die hydrostatischen Messeinheiten 19 sind demzufolge nach dem Prinzip der kommunizierenden Röhren bzw. nach dem Prinzip einer Schlauchwasserwaage miteinander gekoppelt.

Die flüssigkeitsseitig miteinander gekoppelten, hydrostatischen Messeinheiten vermessen jeweils die relative Höhenänderung der Flüssigkeitspegel und übermitteln entsprechende Messsignale an eine nicht-dargestellte Auswerteeinrichtung, nämlich ein Rechnersystem. In der Auswerteeinrichtung kann aus den von den hydrostatischen Messelementen 19 bereitgestellten Messsignalen, nämlich aus den relativen Höhenänderungen der entsprechenden Flüssigkeitspegel, sowie aus der Relativposition bzw. dem Abstand der einzelnen hydrostatischen Messeinheiten zueinander die Verformung bzw. Bewegung des Maschinenfundaments 17 bestimmt bzw. errechnet werden.

Wie Fig. 1 entnommen werden kann, sind die einzelnen hydrostatischen Messeinheiten 19 der erfindungsgemäßen Druckmaschinenmessanordnung auf dem Maschinenfundament 17 positioniert, und zwar vorzugsweise derart, dass dieselben zumindest den für die Druckmaschine relevanten Abschnitt des Maschinenfundaments 17 umspannen. Vorzugsweise sind die hydrostatischen Messeinheiten dabei benachbart zu Maschinenfüßen der Bogendruckmaschine 10 auf dem Maschinenfundament 17 angeordnet.

Die einzelnen hydrostatischen Messeinheiten 19 der erfindungsgemäßen Druckmaschinenmessanordnung sind nicht nur flüssigkeitsseitig miteinander gekoppelt, sondern vielmehr auch luftseitig. Hierdurch wird gewährleistet, dass im Bereich jeder hydrostatischen Messeinheit 19 oberhalb des Flüssigkeitspegels ein einheitlicher Atmosphärendruck herrscht. Hierdurch werden eventuelle Druckunterschiede im Bereich der einzelnen Messeinheiten 19, die das Messergebnis der erfindungsgemäßen Druckmaschinenmessanordnung verfälschen können, eliminiert.

Die hydrostatischen Messeinheiten 19 der erfindungsgemäßen Druckmaschinenmessanordnung bilden demnach sozusagen ein geschlossenes Messsystem, wobei dasselbe sowohl flüssigkeitsseitig als auch luftseitig geschlossen ist.

In Abweichung von dem in Fig. 1 dargestellten Ausführungsbeispiel können die einzelnen hydrostatischen Messeinheiten 19 ringförmig und zugleich sternförmig gekoppelt sein, wobei in diesem Fall der Flüssigkeitsaustausch zwischen den einzelnen Messeinheiten 19 bei einer Verformung bzw. Bewegung des Maschinenfundaments 17 beschleunigt werden kann.

Die hydrostatischen Messeinheiten 19 eines geschlossenen Messsystems bzw. der Messanordnung sind flüssigkeitsseitig über Flüssigkeitsleitungen bzw. Flüssigkeitsschläuche und luftseitig über Luftleitungen bzw. Luftschläuche gekoppelt, wobei die Verhältnisse der Durchmesser von den Messeinheiten, den Flüssigkeitsleitungen und den Luftleitungen so gewählt sind, dass sich das Messsystem in einem aperiodischen Grenzfall befindet, derart, dass sich bei einer verursachten Pegeländerung der Flüssigkeit der Flüssigkeitspegel ohne Überschwingen einstellt. Das Messsystem bzw. die Flüssigkeitsleitungen ist weiterhin hoch gedämpft, so dass eine äußere Anregung desselben durch Vibrationen nahezu keinen Einfluss auf die Lage des Flüssigkeitspegels hat.

Nachfolgend wird unter Bezugnahme auf Fig. 2 bis 5 der Aufbau einer hydrostatischen Messeinheit 19 der erfindungsgemäßen Druckmaschinenmessanordnung in größerem Detail beschrieben.

So zeigt Fig. 2 einen schematisierten Querschnitt durch eine hydrostatische Messeinheit 19, die einen Messzylinder 20 umfasst. Der Messzylinder 20 wird von einer Zylinderwand 21, einem Fußteil 22 sowie einem Deckelteil 23 definiert. Ein von der Zylinderwand 21, dem Fußteil 22 und dem Deckelteil 23 definierter Hohlraum 24 des Messzylinders 20 nimmt eine nicht dargestellte Flüssigkeit auf, deren Flüssigkeitspegel mit Hilfe der hydrostatischen Messeinheit 19 zu vermessen ist.

In den Hohlraum 24 des Messzylinders 20 ragt von oben, also über das Deckelteil 23, ein magnetostriktiver Wegaufnehmer 25 hinein, an welchem ein Schwimmkörper 26 geführt ist. Der Schwimmkörper 26 verfügt hierzu in einem oberen Abschnitt über eine mittlere Bohrung 27, durch die sich der magnetostriktive Wegaufnehmer 25 erstreckt. Diese Bohrung 27 ist dabei derart bemessen, dass eine stabile Führung des Schwimmkörpers 26 am magnetostriktiven Wegaufnehmer 25 gewährleistet ist, jedoch keine Gefahr einer Verkantung und damit eines Blockierens des Schwimmkörpers 26 am magnetostriktiven Wegaufnehmer 25 besteht. Dabei ist von Bedeutung, dass die Führung des Schwimmkörpers 26 am magnetostriktiven Wegaufnehmer 25 oberhalb des zu vermessenden Flüssigkeitspegels angeordnet ist, um so durch Kapillarkräfte der Flüssigkeit verursachte Messungenauigkeiten zu reduzieren.

Dem Schwimmkörper 26 ist im oberen Abschnitt ein magnetisches Element 28 zugeordnet, welches mit dem magnetostriktiven Wegaufnehmer 25 zur Erfassung des Flüssigkeitspegels zusammenwirkt. Das magnetische Element 28 ist im Bereich der Führung des Schwimmkörpers 26 am magnetostriktiven Wegaufnehmer 25 und damit oberhalb des zu vermessenden Flüssigkeitspegels angeordnet.

Zur Reduzierung von durch Kohäsion und/oder Adhäsion verursachten Messungenauigkeiten weist ein von der Flüssigkeit kontaktierter Abschnitt einer Außenwand 29 des Schwimmkörpers 26 von der Zylinderwand 21 des Messzylinders 20 einen Abstand von mindestens 15 mm auf. Ebenso beträgt der Abstand zwischen einem von der Flüssigkeit kontaktierten Abschnitt einer Innenwand 30 des Schwimmkörpers 26 und dem Wegaufnehmer 25 mindestens 15 mm.

Der Einfluss von die Messgenauigkeit beeinträchtigenden Kapillarkräften kann dadurch weiter minimiert werden, dass die Zylinderwand 21 des Messzylinders 20 aus Glas, vorzugsweise aus Borosilikatglas hergestellt ist.

Borosilikatglas besteht aus: 70 - 80 % Siliziumdioxid (SiO₂); 7 - 13 % Boroxid (B₂O₃); 4 - 8 % Alkalimetalloxiden wie z.B. Natriumoxid (Na₂O) oder Kaliumoxid (K₂O), 2 - 7 % Aluminiumoxid (Al₂O₃); und 0 - 5 % Erdalkalimetalloxiden.

In diesem Zusammenhang ist weiterhin von Bedeutung, dass der Schwimmkörper 26 aus einem Kunststoff, insbesondere aus Polypropylen, gebildet ist. Als Flüssigkeit kommt Wasser zum Einsatz, welchem zur Entspannung ein oberflächenspannungsreduzierendes Zusatzmittel, insbesondere ein Tensid, zugesetzt ist. Durch die kombinierte Verwendung einer Zylinderwand aus Glas, eines Schwimmkörpers aus Polypropylen und von mit einem oberflächenspannungsreduzierenden Tensid gemischtem Wasser als Flüssigkeit können durch Kohäsionskräfte und/oder Adhäsionskräfte verursachte Messungenauigkeiten auf ein Minimum reduziert werden.

Der Schwimmkörper 26 verfügt sowohl im Bereich einer Oberseite 31 als auch einer Unterseite 32 über eine geneigte Oberflächenkontur, wobei die geneigte Oberflächenkontur im Bereich der Unterseite 32 und im Bereich der Oberseite 31 das Anhaften von die Messgenauigkeit beeinträchtigenden Luftblasen und/oder Kondensattröpfchen am Schwimmkörper 26 verhindert bzw. das Ablaufen derselben ermöglicht.

Wie bereits im Zusammenhang mit der erfindungsgemäßen Druckmaschinenmessanordnung ausgeführt, sind mehrere derartige hydrostatische Messeinheiten 19 sowohl flüssigkeitsseitig als auch luftseitig miteinander gekoppelt. Hierzu ist in das Fußteil 22 einer solchen Messeinheit 19 ein Flüssigkeitsanschluss 33 integriert. In den Deckelteil 23 ist hingegen ein Luftanschluss 34 integriert.

Die in Fig. 2 dargestellte hydrostatische Messeinheit 19 kann mit Hilfe eines nicht-dargestellten Deckels, der die Messeinheit 19 vorzugsweise komplett umschließt, einerseits thermisch und andererseits elektromagnetisch abgeschirmt werden.

Durch die thermische Abschirmung wird eine Wärmeisolierung der Messeinheit 19 realisiert, die bewirkt, dass sich die Messeinheit 19 nicht partiell durch Umwelteinflüsse erhitzt. Dies ist Voraussetzung für eine weiter unten beschriebene Temperaturkompensation.

Die elektromagnetische Abschirmung der Messeinheit 19 ist im Hinblick auf eine Verbesserung der vom magnetostriktiven Wegaufnehmer bereitgestellten Messsignale von Bedeutung.

Da bei Verteilung mehrerer Messeinheiten 19 entlang eines Maschinenfundaments 17 nicht ausgeschlossen werden kann, dass im Bereich der Messeinheiten 19 unterschiedliche Temperaturen herrschen, wird im Sinne der hier vorliegenden Erfindung vorgeschlagen, in die Messeinheiten 19 einen nicht-dargestellten Temperatursensor zu integrieren, mit welchem die Temperatur der in der jeweiligen Messeinheit 19 aufgenommenen Flüssigkeit auf 1/10°C bestimmt werden kann. Der Temperatursensor ist in einer Bohrung 35 im Bereich Fußteils 22 geführt und über eine Bohrung 36 sind Signalleitungen desselben abführbar.

Diese Temperaturmesswerte werden dann von den hydrostatischen Messeinheiten 19 zusammen mit den von den Wegaufnehmern bereitgestellten Messsignalen über die Flüssigkeitspegel der nicht-dargestellten Auswerteeinrichtung übermittelt, die dann die von den Wegaufnehmern bereitgestellten Messsignale auf Basis von Temperaturkennlinien korrigiert, um unterschiedliche Temperaturen im Bereich der einzelnen Messeinheiten 19 zu kompensieren.

Mit Hilfe der oben beschriebenen Messeinheit kann eine Druckmaschinenmessanordnung aufgebaut werden, mit Hilfe derer Bewegungen bzw. Verformungen von Maschinenfundamenten einer Druckmaschine mikrometergenau erfasst werden können.

Weiterhin kann eine solche Messanordnung zur Installation einer Druckmaschine auf einem Maschinenfundament verwendet werden, wobei dann die Messeinheiten über angepasste Adapter bzw. Standfüße vorzugsweise auf den Druckmaschinenzylindern der zu installierenden Druckmaschinen positioniert werden.

Obwohl die Verwendung der oben beschriebenen Messeinheit bei einer Druckmaschinenmessanordnung bevorzugt ist, kann sie auch bei der Vermessung von Fundamenten anderer Einrichtungen wie z.B. Brücken, Unterzügen und dergleichen verwendet werden.

### Bezugszeichenliste

- 10: Bogendruckmaschine
- 11: Anleger
- 12: Druckwerk
- 13: Lackwerk
- 14: Trocknungseinrichtung
- 15: Ausleger
- 16: Pfeil
- 17: Maschinenfundament
- 18: Trennfuge
- 19: hydrostatische Messeinheit
- 20: Messzylinder
- 21: Zylinderwand
- 22: Fußteil
- 23: Deckelteil
- 24: Hohlraum
- 25: magnetostriktiver Wegaufnehmer
- 26: Schwimmkörper
- 27: Bohrung
- 28: magnetisches Element
- 29: Außenwand
- 30: Innenwand
- 31: Oberseite
- 32: Unterseite
- 33: Flüssigkeitsanschluss
- 34: Luftanschluss
- 35: Bohrung
- 36: Bohrung

## Patentansprüche

1. Hydrostatische Messeinheit, insbesondere für eine Druckmaschinenmessanordnung, mit einem Messzylinder (20), der eine hinsichtlich ihres Flüssigkeitspegels zu vermessende Flüssigkeit aufnimmt, wobei der Messzylinder (20) weiterhin einen auf der Flüssigkeit schwimmenden Schwimmkörper (26) aufnimmt, wobei der Schwimmkörper (26) eine Bohrung (27) aufweist, durch die sich ein vorzugsweise magnetostriktiver Wegaufnehmer (25) zur Führung des Schwimmkörpers (26) erstreckt, und wobei der Schwimmkörper (26) ein mit dem Wegaufnehmer (25) zusammenwirkendes magnetisches Element (28) derart trägt, dass das magnetische Element (28) am Schwimmkörper (26) im Bereich der Bohrung (27) angeordnet ist, **dadurch gekennzeichnet,**
**dass das magnetische Element (28) und die der Führung des Schwimmkörpers (26) entlang des Wegaufnehmers (25) dienende Bohrung (27) oberhalb des zu vermessenden Flüssigkeitspegels angeordnet sind.**

2. Messeinheit nach Anspruch 1,
**dadurch gekennzeichnet, dass** eine von der Flüssigkeit kontaktierte Zylinderwand (21) des Messzylinders (20) aus Glas, insbesondere aus Borosilikatglas, gebildet ist, dass der ebenfalls von der Flüssigkeit kontaktierte Schwimmkörper (26) aus einem Kunststoff, insbesondere aus Polypropylen, gebildet ist, und dass die Flüssigkeit aus Wasser mit einem oberflächenspannungsreduzierenden, insbesondere als Tensid ausgebildeten, Zusatzmittel gebildet ist.

3. Messeinheit nach Anspruch 1 oder 2,
**dadurch gekennzeichnet, dass** ein von der Flüssigkeit kontaktierter Abschnitt einer Außenwand (29) des Schwimmkörpers (26) von der Zylinderwand (21) des Messzylinders (20) einen Abstand von mindestens 15 mm aufweist, und dass weiterhin ein von der Flüssigkeit kontaktierter Abschnitt einer Innenwand (30) des Schwimmkörpers (26) vom Wegaufnehmer (25) einen Abstand von mindestens 15 mm aufweist.

4. Messeinheit nach einem oder mehreren der Ansprüche 1 bis 3,
**dadurch gekennzeichnet, dass** der Schwimmkörper (26) an einer Oberseite (31) und an einer Unterseite (32) eine geneigte Oberflächenkontur aufweist.

5. Messeinheit nach einem oder mehreren der Ansprüche 1 bis 4,
**dadurch gekennzeichnet, dass** in dieselbe ein Temperatursensor integriert ist.

6. Messeinheit nach einem oder mehreren der Ansprüche 1 bis 5,
**dadurch gekennzeichnet, dass** dieselbe von einem Deckel zur Wärmeisolierung und elektromagnetischen Abschirmung umschlossen ist.

7. Druckmaschinenmessanordnung mit einer Messeinheit nach den Ansprüchen 1 bis 6, insbesondere für eine Bogendruckmaschine,
**dadurch gekennzeichnet, dass** zur mikrometergenauen Erfassung von Verformungen eines Maschinenfundaments der Druckmaschine und/oder zur mikrometergenauen Installation der Druckmaschine auf einem Maschinenfundament mehreren hydrostatischen Messeinheiten (19) angeordnet sind, wobei die hydrostatischen Messeinheiten (19) unter Bildung eines geschlossenen Messsystems einerseits flüssigkeitsseitig zur Gewährleistung eines Flüssigkeiteaustauschs zwischen den hydrostatischen Messeinheiten (19) und andererseits luftseitig zur Bereitstellung eines einheitlichen Atmosphärendrucks im Bereich der hydrostatischen Messeinheiten (19) untereinander gekoppelt sind, und wobei die hydrostatischen Messeinheiten (19) weiterhin mit einer Auswerteeinrichtung verbunden sind, die aus von den hydrostatischen Messeinheiten (19) bereitgestellten Messsignalen die Verformung des Maschinenfundaments oder die Installation der Druckmaschine auf dem Maschinenfundament mikrometergenau bestimmt und/oder bewertet,
wobei die hydrostatischen Messeinheiten ringförmig oder ringförmig und zugleich sternförmig gekoppelt sind.

## Claims

1. A hydrostatic measuring unit, particularly for a printing press measuring arrangement, with a measuring cylinder (20) which receives a liquid to be measured with respect to its liquid level, wherein the measuring cylinder (20) furthermore receives a float body (26) floating on the liquid, wherein the float body (26) comprises a bore (27), through which a preferentially magnetostrictive travel pickup (25) for the guiding of the float body (26) extends, and wherein the float body (26) carries a magnetic element (28) interacting with the travel pickup (25) in such a manner that the magnetic element (28) on the float body (26) is arranged in region of the bore (27), **characterized in that** the magnetic element (28) and the bore (27) serving for the guiding of the float body (26) along the travel pickup (25) are arranged above the liquid level to be measured.

2. The measuring unit according to Claim 1, **characterized in that** a cylinder wall (21) of the measuring cylinder (20) contacted by the liquid is formed of glass, particularly of boroscilicate glass, **in that** the float body (26) likewise contacted by the liquid is formed of a plastic, particularly of polypropylene, and **in that** the liquid is formed of water with a surface tension-reducing additive, more preferably embodied as tenside.

3. The measuring unit according to Claim 1 or 2, **characterized in that** a portion of an outer wall (29) of the float body (26) contacted by the liquid has a spacing of at least 15 mm from the cylinder wall (21) of the measuring cylinder (20), and **in that** furthermore a portion of an inner wall (30) of the float body (26) contacted by the liquid has a spacing from the travel pickup (25) of at least 15 mm.

4. The measuring unit according to any one or a plurality of the Claims 1 to 3, **characterized in that** the float body (26) on a top side (31) and on a bottom side (32) has an inclined surface contour.

5. The measuring unit according to any one or a plurality of the Claims 1 to 4, **characterized in that** in said measuring unit a temperature sensor is integrated.

6. The measuring unit according to any one or a plurality of the Claims 1 to 5, **characterized in that** said measuring unit is enclosed by a lid for the heat insulation and electromagnetic shielding.

7. A printing press measuring arrangement with a measuring unit according to the Claims 1 to 6, particularly for a sheet-fed printing press, **characterized in that** for the micrometer-accurate registering of deformations of a machine foundation of the printing press and/or for the micrometer-accurate installation of the printing press on a machine foundation a plurality of hydrostatic measuring units (19) are arranged, wherein the hydrostatic measuring units (19) are coupled together subject to the formation of a closed measuring system on the one hand on the liquid side for ensuring a liquid exchange between the hydrostatic measuring units (19) and on the other hand on the air side for providing a uniform atmospheric pressure in the region of the hydrostatic measuring units (19), and wherein the hydrostatic measuring units (19) furthermore are connected to an evaluation arrangement, which from the measuring signals provided by the hydrostatic measuring units (19) determines and/or evaluates the deformation of the machine foundation or the installation of the printing press on the machine foundation accurate to the micrometer, wherein the hydrostatic measuring units are coupled in a ring-shaped or ring-shaped and simultaneously star-shaped manner.

## Revendications

1. Unité de mesure hydrostatique, notamment pour dispositif de mesure de machine d'impression, comportant un cylindre de mesure (20) qui reçoit un liquide dont le niveau de liquide est à mesurer, le cylindre de mesure (20) recevant en outre un corps flottant (26) surnageant sur le liquide, le corps flottant (26) présentant une perforation (27) dans laquelle s'étend un enregistreur de course (25) de préférence magnétorestrictif pour guider le corps flottant (26) et le corps flottant (26) supportant un élément magnétique (28) coopérant avec l'enregistreur de course (25) de manière à ce que l'élément magnétique (28) soit disposé au niveau du corps flottant (26) au niveau de la perforation (27),
**caractérisée en ce que**
l'élément magnétique (28) et la perforation (27) servant à guider le corps flottant (26) le long de l'enregistreur de course (25) sont disposés au-dessus du niveau de liquide à mesurer.

2. Unité de mesure selon la revendication 1,
**caractérisée en ce qu'**une paroi du cylindre (21) en contact avec le liquide du cylindre de mesure (20) est composée de verre, notamment de verre de borosilicate, que le corps flottant (26) également en contact avec le liquide est composé d'un plastique, notamment de polypropylène, et que le liquide est composé d'eau contenant un additif réduisant la tension surfacique, en particulier de l'agent tensioactif.

3. Unité de mesure selon la revendication 1 ou 2,
**caractérisée en ce qu'**une section en contact avec le liquide d'une paroi extérieure (29) du corps flottant (26) est à une distance d'au moins 15 mm de la paroi cylindrique (21) du cylindre de mesure (20) et que, de plus, qu'une section en contact avec le liquide d'une paroi intérieure (30) du corps flottant (26) est à une distance d'au moins 15 mm de l'enregistreur de course (25).

4. Unité de mesure selon une ou plusieurs des revendications 1 à 3,
**caractérisée en ce que** le corps flottant (26) présente un contour de surface incliné au niveau d'une face supérieure (31) et d'une face inférieure (32).

5. Unité de mesure selon une ou plusieurs des revendications 1 à 4,
**caractérisée en ce qu'**un capteur de température est intégré dans celle-ci.

6. Unité de mesure selon une ou plusieurs des revendications 1 à 5,
**caractérisée en ce que** celle-ci est entourée d'un couvercle servant d'isolation thermique et de blindaqe électromagnétique.

7. Dispositif de mesure de machine d'impression comportant une unité de mesure selon les revendications 1 à 6, notamment pour machine d'impression de feuilles,
**caractérisé en ce que**, pour détecter au micromètre près les déformations d'une embase mécanique de la machine d'impression et/ou pour installer au micromètre près la machine d'impression, plusieurs unités de mesure hydrostatiques (19) sont disposées sur une embase mécanique, les unités de mesure hydrostatiques (19) étant couplées entre elles en formant un système de mesure fermé d'une part du côté du liquide pour garantir un échange de liquide entre les unités de mesure hydrostatiques (19) et d'autre part du côté atmosphérique pour établir une pression atmosphérique uniforme au niveau des unités de mesure hydrostatiques (19) et les unités de mesure hydrostatiques (19) étant en outre raccordées à un dispositif d'exploitation qui définit et/ou évalue au micromètre près, à partir des signaux de mesure délivrés par les unités de mesure hydrostatiques (19), la déformation de l'embase de machine ou l'installation de la machine d'impression sur l'embase de machine,
les unités de mesure hydrostatiques étant couplées en forme d'anneau ou en même temps en forme d'anneau et d'étoile.
